# EUROPEAN PATENT SPECIFICATION

(11) **EP 1 312 694 B1**
(45) Date of publication and mention of the grant of the patent: **13.06.2012**
(21) Application number: 02025341.5
(22) Date of filing: 13.11.2002
(51) Int. Cl.: C23C 8/22, C23C 8/80

(54) **Rolling, sliding part and process for producing same**
Walz-und Gleitelement und Verfahren zur Herstellung
Pièce roulante,glissante et procédé de sa fabrication

(30) Priority: 14.11.2001 JP 2001348343; 18.12.2001 JP 2001384812; 31.05.2002 JP 2002158887
(43) Date of publication of application: 21.05.2003
(73) Proprietor: JTEKT Corporation, Osaka-shi Osaka 542-8502 (JP)
(72) Inventor: Kizawa, Katsuhiko, c/o Koyo Seiko Co., Ltd., Osaka 542-0081 (JP)
(74) Representative: TER MEER - STEINMEISTER & PARTNER GbR

(56) References cited:
- EP-A- 1 099 869
- DE-A- 19 950 813
- US-A- 5 137 375
- US-A- 5 873 956
- US-B1- 6 197 128
- PATENT ABSTRACTS OF JAPAN vol. 1995, no. 05, 30 June 1995 (1995-06-30) & JP 07 041934 A (KOYO SEIKO CO LTD), 10 February 1995 (1995-02-10)
- PATENT ABSTRACTS OF JAPAN vol. 1995, no. 06, 31 July 1995 (1995-07-31) & JP 07 076764 A (KOYO SEIKO CO LTD), 20 March 1995 (1995-03-20)
- PATENT ABSTRACTS OF JAPAN vol. 1995, no. 05, 30 June 1995 (1995-06-30) & JP 07 041863 A (KOYO SEIKO CO LTD), 10 February 1995 (1995-02-10)

## Description

### BACKGROUND OF THE INVENTION

The present invention relates to rolling, sliding parts and a process for producing the same, and more particularly to races of antifriction bearings and rolling parts for use as rolling elements of such bearings, or sliding parts suitable for use in sliding bearings, as adapted for use with a lubricant containing extraneous matter, and to a process for producing such parts.

Document EP-A-1 099 869 A2 discloses an antifriction bearing comprising bearing rings and rolling members which are made from a steel material containing 0.15 to 0.3 wt. % of carbon by being subjected to heat treatments including carburizing. The surface layer of raceway surface of each of the bearing rings and the surface layer of rolling surface of each of the rolling members are 1.0 to 1.5 wt. % in carbon content, 64 to 66 in Rockwell hardness C. 150 to 2000 MPa in compressive residual stress, up to 3 µm in maximum carbide particle size and 10 to 25 % in carbide area ratio, at a depth of 0 to 50 µm as measured from the outermost surface of the surface layer. The surface layers are 0.75 to 1.3 wt. % in carbon content, 150 to 1000 MPa in compressive residual stress, 25 to 45 % in residual austenite content, up to 1 µm in maximum carbide particle size and up to 15 % in carbide area ratio, at a depth of 50 to 200 µm as similarly measured from the outermost surface.

Furthermore, document US 5,137,375 discloses a rolling bearing having bearing rings and rolling members wherein at least one of the bearing rings and the rolling members essentially consists of an alloy steel which contains carbide-forming elements. The bearing rings and the rolling members are subjected to carburizing or carbo-nitriding, and then hardening to form a rolling surface layer.

To give a prolonged life to antifriction bearings for use with a lubricant containing extraneous matter becoming mixed therewith, it is required to increase the surface hardness of the races and rolling elements of the bearing, for example, to 62 to 67 in Rockwell C hardness (hereinafter referred to as "HRC"), to precipitate a predetermined amount of fine carbide as dispersed in the surface layers of the raceway surfaces and the rolling surfaces of the rolling elements, to adjust the amount of retained austenite in the surface layers of the raceway surfaces and the rolling surfaces of the rolling elements, for example, to a predetermined value of 20 to 40 vol. %, and to impart a predetermined compressive residual stress, for example, of at least 100 MPa to the surface layers of the raceway surfaces and the rolling surfaces of the rolling elements. The increase in the surface hardness is intended to prevent impression by extraneous matter, and the dispersion of fine carbide precipitate is intended to give improved wear resistance, ensure dispersion strengthening of the material by precipitating a hard second phase of carbide and the like in steel, increased yield strength and higher deformation resistance and improved toughness. The retained austenite as adjusted in amount to the predetermined value is intended to reduce the compressive stress attributable to the extraneous matter and suppress the development of cracks due to extraneous matter. The predetermined compressive residual stress to be given is intended to inhibit the development of cracks due to the extraneous matter.

Conventionally used as rolling, sliding parts fulfilling the above requirements are those produced by preparing blanks of case-hardened steel in a specified shape and carburizing or carbonitriding the blanks.

However, case-hardened steel to be used for bearings is small in amount, is not produced in large quantities, is therefore costly as a material, and further requires an expensive heat treatment for carburizing or carbonitriding. The steel accordingly has the problem of increasing the overall manufacturing cost of rolling, sliding parts.

It appears useful to produce rolling, sliding parts by preparing blanks of JIS SUJ2 or like bearing steel in a specified form and carburizing or carbonitriding the blanks, whereas it is then impossible to afford an increased surface hardness and form a finely divided carbide at the same time. For example, if the steel JIS SUJ2 which originally has a high carbon content and contains carbide is carburized to give an increased surface hardness, the existing carbide further grows to form large particles of carbide. Consequently, the product has the problem of exhibiting a shortened life when used with a lubricant containing extraneous matter.

### DISCLOSURE OF THE INVENTION

An object of the present invention is to overcome the above problems and to provide a rolling, sliding part and a process for producing the same, the rolling, sliding part being improved in wear resistance, usable with a lubricant free of or less susceptible to impression by extraneous matter present in the lubricant, and less susceptible to compressive stress due to the extraneous matter, with the development of cracks suppressed.

The term "rolling, sliding part" refers to a part which is brought into contact with other part, the term "contact" involving pure rolling contact, pure sliding contact and both rolling contact and sliding contact.

The present invention provides a rolling, sliding part according to claim 1.

The rolling, sliding part of the present invention has an increased surface hardness, is free from or less susceptible to impression by the extraneous matter contained in the lubricant, is improved in wear resistance, and is therefore usable for affording antifriction bearings of prolonged life. The part is made of bearing steels (High carbon chromium bearing steels) which are produced in large quantities, accordingly low in material cost and consequently low in overall manufacturing cost. Especially JIS SUJ2 is available by mass production unlike other bearing steels, so that use of this steel results in a very low material cost and is preferred.

The present invention provides an antifriction bearing which comprises an inner and an outer race and rolling elements, and one of the inner and outer races and the rolling member comprises the rolling, sliding part of the invention described. The inner race of the antifriction bearing is particularly liable to break because the contact between the raceway surface thereof and the rolling elements is contact between projecting or bulging portions which produces an increased compressive stress. In the case where the rolling, sliding part of the invention is used for the inner race of an antifriction bearing, the inner race can be prevented from breaking, giving a prolonged life to the antifriction bearing.

The present invention provides a rolling sliding part characterized by the features of claim 1.

The process for producing the rolling, sliding part uses a bearing part blank made of a bearing steel which is generally used for bearings and is therefore low in material cost. The blank is carburized at a temperature of 840 to 870° C once and thereafter quenched, and can therefore be heat-treated at a low cost. The bearing part is therefore low in total manufacturing cost. Among bearing steels, JIS SUJ2 is available especially by mass production, so that use of this steel results in a very low material cost and is selected.

According to the process for producing the rolling, sliding part of the invention, the blank is treated to dissolve the existing carbide in the matrix and thereafter carburized, so that finely particulate carbide can be caused to separate out again from the nuclei of the solid-solution carbide in the matrix. This prevents fatigue cracking and assures toughness, giving a prolonged life to the rolling, sliding part. Furthermore, the use of the bearing steel which is available by mass production results in a lower material cost. As a result, the bearing part obtained is low in total manufacturing cost. Among bearing steels, JIS SUJ2 in particular is available by mass production, so that use of this steel entails a very low material cost and is selected.

### BRIEF DESCRIPTION OF THE DRAWINGS

FIG. 1 is a diagram showing heat treatment condition 1.
FIG. 2 is a diagram showing heat treatment condition 2.
FIG. 3 is a diagram showing heat treatment condition 3.
FIG. 4 is a diagram showing heat treatment condition 4.
FIG. 5 is a diagram showing heat treatment condition 5.
FIG. 6 is a diagram showing heat treatment condition 6.
FIG. 7 is a diagram showing heat treatment condition 7.
FIG. 8 is a diagram showing heat treatment condition 8.
FIG. 9 is a diagram showing heat treatment condition 9.
FIG. 10 is a diagram showing heat treatment condition 10.
FIG. 11 is a diagram showing heat treatment condition 11.

### DESCRIPTION OF THE PREFERRED EMBODIMENTS

The values relating to the rolling, sliding part of the invention are limited for the following reasons.

### Total Carbon Content of Surface Layer

The total carbon content is limited to 1.0 to 1.6 wt. % because if the content is over the upper limit, the carbide becomes very coarse and can not be finely divided. The lower limit is inevitably determined because a bearing steel such as JIS SUJ2 is used as the base material.

### Solid-solution C Content of Surface Layer Matrix

The solid-solution carbon content is limited to 0.6 to 1.0 wt. % because amounts less than the lower limit fail to afford the desired surface hardness, permitting the extraneous matter in the lubricant to produce impressions on the part, and because if the upper limit is exceeded, the amount of fine carbide in the surface layer becomes smaller than 5% in area ratio to entail lower wear resistance.

### Amount of Fine Carbide in Surface Layer

The amount of fine carbide is limited to 10 to 20% in area ratio because amounts less than the lower limit result in impaired wear resistance, and because if the upper limit is exceeded, coarse carbide particles are formed, serving as starting points of fatigue cracks and giving a shortened life to the rolling, sliding part.

### Particle Size of Fine Carbide in Surface Layer

With the rolling, sliding part of the invention, the amount of carbide is 10 to 20% in area ratio, and the particle size thereof is up to 2 µm. The lower limit for the amount of the carbide is 10% in area ratio because if less than 10%, the amount of carbide particles of micron order and submicron order become insufficient to result in the likelihood that the effect to improve the rolling fatigue life will not be available. The carbide of micron order is effective for preventing formation of a slip band that will cause rolling fatigue, while the carbide of submicron order is effective to diffuse the slip band although having no effect to prevent formation of the slip band. The carbide is up to 2 µm in particle size because if greater than 2 µm, carbide particles will provide starting points of fatigue cracks like nonmetallic inclusions, possibly failing to ensure toughness.

With the rolling, sliding part of the invention, the surface layer may have a surface hardness of 62 to 67 in Rockwell C hardness, contain 20 to 40 vol. % of retained austenite and have a compressive residual stress of at least 100 MPa. When the surface layer has a surface hardness of 62 to 67 in HRC, the part is prevented from becoming impressed by the extraneous matter present in the lubricant, whereas such an effect is not available if the hardness is less than 62 in HRC. Although there is a need to give an increased solid-solution carbon content to the matrix of the surface layer in order to give the surface layer a surface hardness greater than 67 in HRC, the amount of fine carbide in the surface layer then reduces, shortening the life of the part as used in the lubricant containing extraneous matter. Further when the surface layer contains 20 to 40 vol. % of retained austenite, it is possible to reduce the compressive stress of the surface layer attributable to the presence of the extraneous matter in the lubricant and to suppress the development of cracks, consequently giving a further prolonged life to antifriction bearings comprising the rolling, sliding part. This effect is nevertheless unavailable if the amount of retained austenite is less than 20 vol, %, whereas if the amount is over 40 vol. %, the surface layer fails to have a surface hardness of at least 62 in HRC.

When the surface layer has a compressive residual stress of at least 100 MPa, the development of cracks can be inhibited, consequently giving a further extended life to antifriction bearings comprising the rolling, sliding part.

The carburizing treatment included in the process for producing rolling, sliding parts of the invention involves numerical values which are limited for the following reasons. Incidentally, the same reasons as given above for the rolling, sliding part described can be explained for limiting the total carbon content of the surface layer, the amount of solid-solution carbon in the matrix of the surface layer, the lower limit for the amount of carbide in the surface layer, the particle size of the carbide in the surface layer, and the upper limit for the amount of carbide in the surface layer.

### Carbon Potential of Carburizing Atmosphere

The carbon potential is limited to not smaller than 1.2% because if the value is less than 1.2%, the bearing steel which is about 1 wt. % in carbon content then remains almost free of carburizing, with the result that the surface layer fails to have the desired hardness and the desired carbide area ratio, and that a finely divided carbide is not available.

### Carburizing Temperature

The temperature is limited to 840 to 870° because temperatures lower than the lower limit fail to effect the desired carburizing treatment described with reference to the carbon potential, whereas if the temperature is in excess of the upper limit, the surface layer has excessively large grain sizes and permits precipitation of large carbide particles to entail an impaired strength. Stated more specifically, the yield strength is in proportion to the -1/2 power of the grain size, so that excessively great grain sizes lead to a lower strength.

### Carburizing Time

The time is limited to at least 3 hours because an insufficient carburizing depth will result if the time is less than 3 hours.

The heat treatment included in the process of the invention for producing rolling, sliding parts involves numerical values which are limited for the following reasons. Incidentally, the same reasons as given above for the rolling, sliding part described can be explained for limiting the total carbon content of the surface layer, the amount of solid-solution carbon in the matrix of the surface layer, the amount of carbide in the surface layer, and the particle size of the carbide in the surface layer.

### Step of Causing Existing Carbide to Dissolve in Matrix

The atmosphere used for this step is limited to 0.9 to 1.1% in carbon potential to prevent the carburizing and decarbonization of the bearing part. If the potential is in excess of 1.1%, the bearing steel becomes carburized which is about 1 wt. % in carbon content, while the steel becomes decarbonized if the potential is less than 0.9%.

The heating temperature for this step is limited to 930 to 970° C because at temperatures of lower than 930° C, the carbide present as a second phase after spheroidizing will not form a sufficient solid solution in the matrix, and further because at temperatures in excess of 970° C, the steel is likely to develop a quenching crack.

The heating time for this step is limited to at least one hour because if the time is less than 1 hour, the carbide present as the second phase after spheroidizing fails to form a sufficient solid solution in the matrix.

### Carburizing Step

The carbon potential is limited to not smaller than 1.2% because if the value is less than 1.2%, the bearing steel which is about 1 wt. % in carbon content then remains almost free of carburizing, with the result that the surface layer fails to have the desired hardness and the desired carbide area ratio, and that a finely divided carbide is not available. The upper limit for the carbon potential is preferably 1.4% in order to preclude production of a large quantity of soot.

The heating temperature for this step is limited to 840 to 870° because temperatures lower than the lower limit fail to effect the desired carburizing treatment described with reference to the carbon potential, whereas if the temperature is in excess of the upper limit, the surface layer has excessively large grain sizes and permits precipitation of large carbide particles to entail an impaired strength. Stated more specifically, the yield strength is in proportion to the -1/2 power of the grain size, so that excessively great grain sizes lead to a lower strength.

The heating time for this step is limited to at least 3 hours because the required carburizing depth will not be available if the time is less than 3 hours.

With the second process of the invention for producing rolling, sliding parts, it is desired that the amount of carbide in the surface layer obtained by the carburizing treatment be 13 to 16% in area ratio.

The reason is that if the amount of carbide is at least 13% in area ratio, this further increases the foregoing effect of the carbide of micron order to prevent formation of the slip band and the above-mentioned effect of the carbide of submicron order to diffuse the slip band which effects have been described with reference to the rolling, sliding part already described, resulting in an improved rolling fatigue life. In view of the cost, it is reasonable that the amount of carbide resulting from gas carburizing be up to 16% in area ratio.

In the case of the rolling, sliding parts of the invention and the two processes of the invention for producing such rolling, sliding parts, the surface layer from the surface to a depth to which a maximum shear stress acts is made to have the state described above for the following reason. Within the range wherein the maximum shear stress acts to cause internally initiated separation, the part is given the foregoing values with respect to the total carbon content, solid-solution carbon content of the matrix and carbon content thereof and is thereby improved in strength, whereby the contemplated object is fulfilled. With rolling, sliding parts typical of which are common antifriction bearing parts, the depth to which the maximum shear stress acts is in the range of from the surface to a depth of 0.5 mm.

### EXAMPLES

Specific examples of the invention are given below along with comparative examples.

### Examples 1-3 and Comparative Examples 1-4

Two kinds of steels were prepared as listed in Table 1 and used to make seven kinds of inner race blanks for use in antifriction bearings, type number 6206.

**Table 1**

| Steel type | Composition (wt. %) | | | | | | |
|---|---|---|---|---|---|---|---|
| | Fe | C | Si | Mn | Ni | Cr | Mo |
| A(SUJ2) | Bal. | 1.01 | 0.24 | 0.36 | 0.04 | 1.46 | 0.01 |
| B(case-hardened steel) | Bal. | 0.20 | 0.20 | 0.80 | 0.05 | 0.85 | 0.01 |

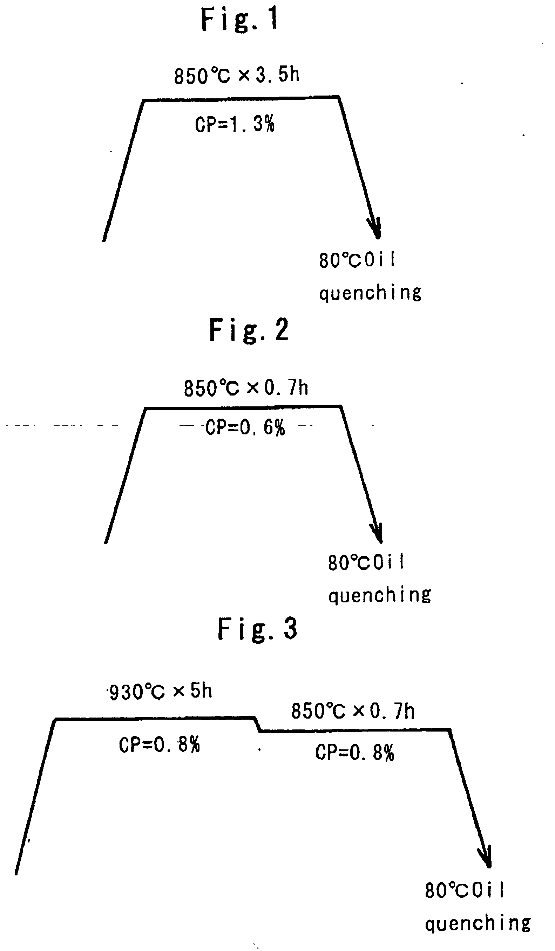

The inner race blanks were then heat-treated under the conditions shown in FIGS. 1 to 5 to produce inner races (Examples 1-3 and Comparative Examples 1-4).

The heat treatment condition 1 shown in FIG. 1 is such that the blank was heated at 850° C for 3 hours in an atmosphere having a carbon potential of 1.3% and thereafter quenched to 80° C in oil.

The heat treatment condition 2 shown in FIG. 2 is such that the blank was heated at 850° C for 0.7 hour in an atmosphere having a carbon potential of 0.6% and thereafter quenched to 80° C in oil.

The heat treatment condition 3 shown in FIG. 3 is such that the blank was heated at 930° C for 5 hours in an atmosphere having a carbon potential of 0.8%, subsequently heated at 850° C for 0.7 hour in an atmosphere with a carbon potential of 0.8% and thereafter quenched to 80° C in oil.

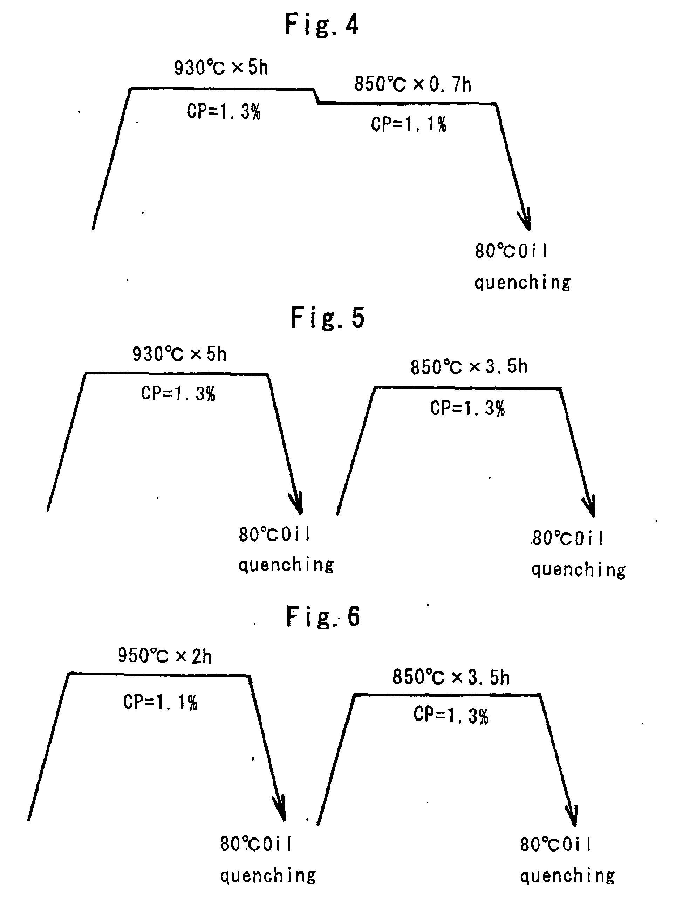

The heat treatment condition 4 shown in FIG. 4 is such that the blank was heated at 930° C for 5 hours in an atmosphere having a carbon potential of 1.3%, subsequently heated at 850° C for 0.7 hour in an atmosphere with a carbon potential of 1.1% and thereafter quenched to 80° C in oil.

The heat treatment condition 5 shown in FIG. 5 is such that the blank was heated at 930° C for 5 hours in an atmosphere having a carbon potential of 1.3%, then quenched to 80° C in oil, subsequently heated at 850° C for 3.5 hours in an atmosphere with a carbon potential of 1.3% and thereafter quenched to 80° C in oil.

Although not shown in the diagrams, the blank in each of the foregoing heat treatments was finally heated at 160° C for 2 hour for tempering.

Table 2 shows the steels, heat treatment conditions and heat treatment costs of the inner races of Examples 1-3 and Comparative Examples 1-4 thus produced. In Table 2, the heat treatment condition 1A corresponds to the heat treatment condition 1 wherein the heating time only was changed to 5 hours, and the heat treatment condition 1B corresponds to the heat treatment condition 1 wherein the heating time only was changed to 3.5 hours. The heat treatment costs are represented by the numerals 1 to 5 in the order of increasing cost.

**Table 2**

| | Type of steel | Heat treatment | |
|---|---|---|---|
| | | Condition | Cost |
| Example 1 | A | 1 | 2 |
| Example 2 | A | 1A | 2 |
| Example 3 | A | 1B | 2 |
| Comp. Ex.1 | A | 2 | 1 |
| Comp. Ex.2 | B | 3 | 3 |
| Comp. Ex.3 | B | 4 | 4 |
| Comp. Ex.4 | B | 5 | 5 |

Table 3 shows the properties or particulars of the inner races of Examples 1-3 and Comparative Examples 1-4 with respect to the hardness (HRC) of the raceway surface, total carbon content of the outermost surface of the raceway, solid-solution carbon content of matrix of the raceway outermost surface, amount (area ratio) of precipitating carbide on the raceway outermost surface, maximum particle size of precipitating carbide on the raceway outermost surface, amount (amount γ_{R}) of retained austenite at the position with a depth of 50 µm from the surface, and compressive residual stress at the position with a depth of 50 µm from the surface.

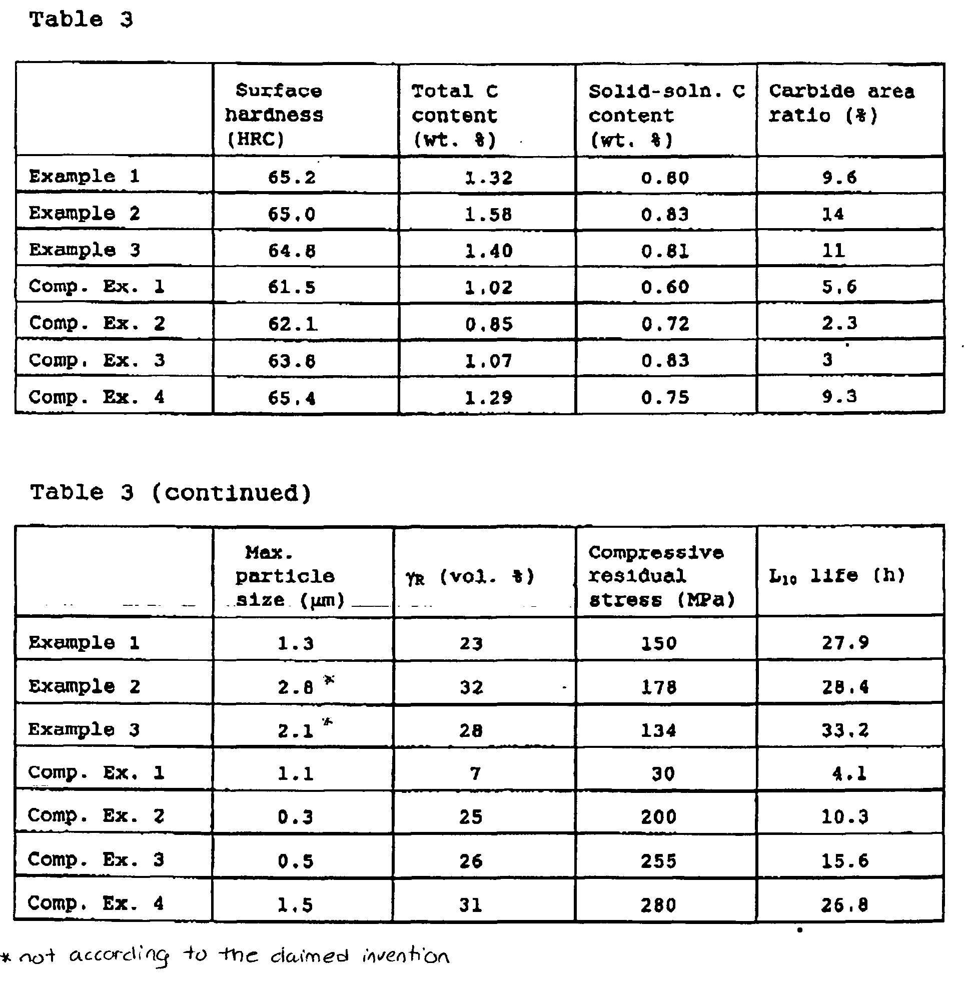

### Evaluation Test 1

Each of the inner races of Examples 1-3 and Comparative Examples 1-4, and an outer race and balls which were made from JIS SUJ2 and subjected to a usual carbonitriding treatment were assembled into a ball bearing, type number 6206C3. The ball bearings thus obtained were subjected to a life test using a lubricant containing extraneous matter becoming mixed therewith. The test conditions are given in Table 4.

**Table 4**

| | |
|---|---|
| Tester | KS radial life tester |
| Radial load | Fr=9000N/set |
| Speed of rotation | 2500 rpm |
| Extraneous matter Extraneous matter | 0.06 wt. % of high-speed steel powder (730 Hv in hardness, 100-150 µm in particle size) |
| Lubrication | turbine oil #68, oil bath (aerated) |
| Oil temperature | spontaneous rise in temp. (about 100° C) |
| Calculated life | 67.8 h |
| Test method | 2 bearings x 5 sudden death tests (evaluation of life of inner race) |

Incidentally the tester shown in Table 4 is adapted to test two ball bearings at the same time, and the radial load in Table 4 means the radial load of one ball bearing.

Table 3 also shows the result of the life test.

L₁₀ life listed in Table 3 was determined by setting two ball bearings having the same inner races on the tester, testing the bearings to measure the time taken for one of the ball bearings to break, repeating this test five times, and calculating the average of the time measurements.

The results described above indicate that the products of Examples 1-3 are not according to the invention

### Example 4 and Comparative Examples 5-9

The two kinds of steels listed in Table 1 were used to make six kinds of inner race blanks for use in antifriction bearings, type number 6206.

The inner race blanks were then heat-treated under the conditions shown in FIGS. 6 to 11 to produce inner races (Example 4 and Comparative Examples 5-9).

The heat treatment condition 6 shown in FIG. 6 is such that the blank was heated at 950° C for 2 hours in an atmosphere having a carbon potential of 1.1%, then quenched to 80° C in oil, subsequently heated at 850° C for 3.5 hours in an atmosphere with a carbon potential of 1.3% and thereafter quenched to 80° C in oil.

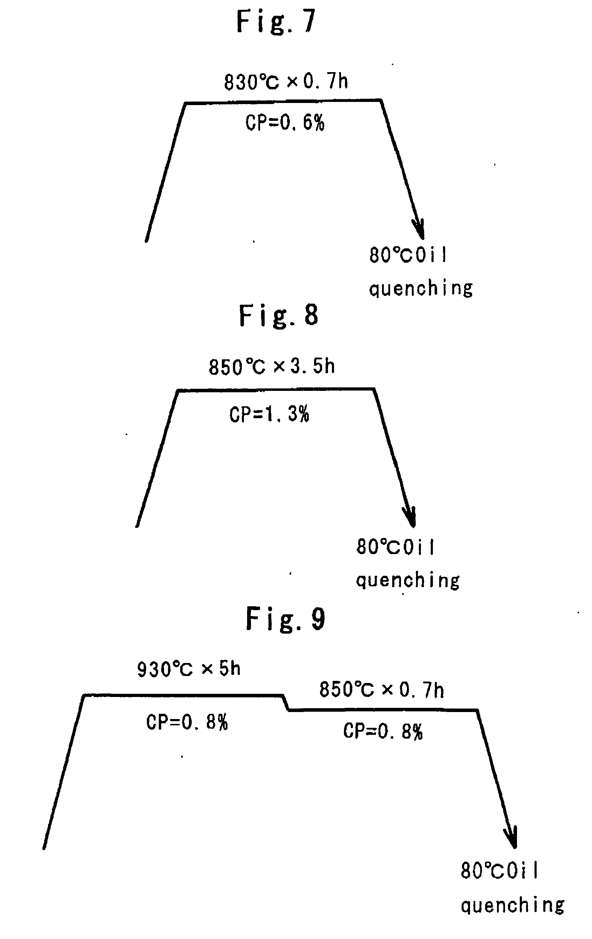

The heat treatment condition 7 shown in FIG. 7 is such that the blank was heated at 830° C for 0.7 hour in an atmosphere having a carbon potential of 0.6% and thereafter quenched to 80° C in oil.

The heat treatment condition 8 shown in FIG. 8 is such that the blank was heated at 850° C for 3.5 hours in an atmosphere having a carbon potential of 1.3% and thereafter quenched to 80° C in oil.

The heat treatment condition 9 shown in FIG. 9 is such that the blank was heated at 930° C for 5 hours in an atmosphere having a carbon potential of 0.8%, subsequently heated at 850° C for 0.7 hour in an atmosphere with a carbon potential of 0.8% and thereafter quenched to 80° C in oil.

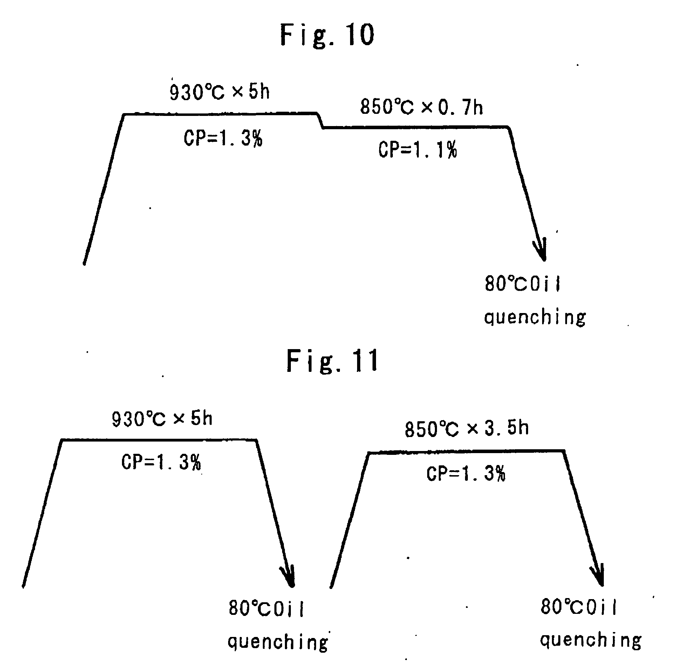

The heat treatment condition 10 shown in FIG. 10 is such that the blank was heated at 930° C for 5 hours in an atmosphere having a carbon potential of 1.3%, subsequently heated at 850° C for 0.7 hour in an atmosphere with a carbon potential of 1.1% and thereafter quenched to 80° C in oil.

The heat treatment condition 11 shown in FIG. 11 is such that the blank was heated at 930° C for 5 hours in an atmosphere having a carbon potential of 1.3%, then quenched to 80° C in oil, subsequently heated at 850° C for 3.5 hours in an atmosphere with a carbon potential of 1.3% and thereafter quenched to 80° C in oil.

Although not shown in the diagrams, the blank in each of the foregoing heat treatments was finally heated at 160° C for 2 hour for tempering.

Table 5 shows the steels, heat treatment conditions and heat treatment costs of the inner races of Example 4 and Comparative Examples 5-9 thus produced. The heat treatment costs are represented by the numerals 1 to 4 in the order of increasing cost.

**Table 5**

| | Type of steel | Heat treatment | |
|---|---|---|---|
| | | Condition | Cost |
| Example 4 | A | 6 | 3 |
| Comp. Ex.5 | A | 7 | 1 |
| Comp. Ex.6 | A | 8 | 2 |
| Comp. Ex.7 | B | 9 | 3 |
| Comp. Ex.8 | B | 10 | 3 |
| Comp. Ex.9 | B | 11 | 4 |

Table 6 shows the properties or particulars of the inner races of Example 4 and Comparative Examples 5-9 with respect to the hardness (HRC) of the raceway surface, total carbon content of the outermost surface of the raceway, solid-solution carbon content of matrix of the raceway outermost surface, amount (area ratio) of precipitating carbide on the raceway outermost surface, maximum particle size of precipitating carbide on the raceway outermost surface, amount (amount γ_{R}) of retained austenite at the position with a depth of 50 µm from the surface, and compressive residual stress at the position with a depth of 50 µm from the surface.

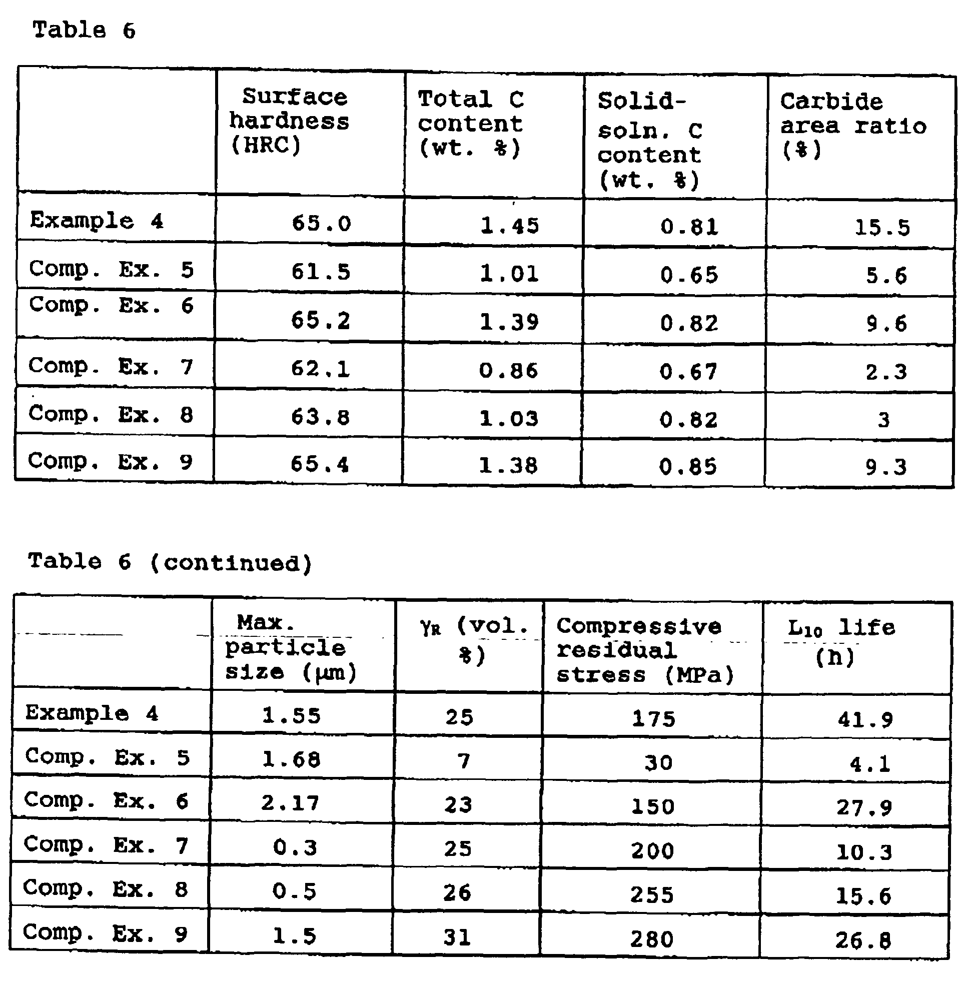

### Evaluation Test 2

Each of the inner races of Example 4 and comparative Examples 5-9, and an outer race and balls which were made from JIS SUJ2 and subjected to a usual carbonitriding treatment were assembled into a ball bearing, type number 6206C3. The ball bearings thus obtained were test for life in the same manner as Evaluation Test 1 using a lubricant containing extraneous matter becoming mixed therewith.

Table 6 also shows the result of the life test.

L₁₀ life listed in Table 6 was determined by setting two ball bearings having the same inner races on the tester, testing the bearings to measure the time taken for one of the ball bearings to break, repeating this test five times, and calculating the average of the time measurements.

The results described above indicate that the product of Example 4 according to the invention is especially low in material cost because JIS SUJ2 which is the largest of the bearing steels in the amount manufactured is used. Further the product of the invention gives a prolonged life to bearings when used for the bearings.

## Claims

1. A rolling, sliding part comprising a bearing steel and being subjected to a carburizing treatment, wherein a surface layer of the part is 1.0 to 1.6 wt. % in total carbon content, the surface layer having a matrix containing 0.6 to 1.0 wt. % of solid-solution carbon, the carbide being up to 3 µm in particle size, the surface layer having a surface hardness of 62 to 67 in Rockwell C hardness, the surface layer containing 20 to 40 vol. % of retained austenite and the surface layer having a compressive residual stress of at least 100 MPa, wherein said rolling, sliding part is prepared from a high carbon chromium bearing steel standardised by JIS (Japanese Industrial Standards) as a base material, and said surface layer having a depth of 0.5 mem from the surface, **characterized in that** the high carbone chromium bearing steel is JIS SUJ 2, and the surface layer contains a precipitating carbide in an amount of 10 to 20% in area ratio, the carbide being up to 2 µm in particle size.

2. An antifriction bearing comprising an inner and an outer race and rolling elements, and at least one of the inner and outer races and the rolling element comprising a part according to claim 1.

## Patentansprüche

1. Roll- und Gleitelement, umfassend einen Lagerstahl, welches einer Aufkohlbehandlung unterzogen ist, wobei eine Oberflächenschicht des Elements einen Gesamtkohlenstoffgehalt von 1,0 bis 1,6 Gewichts-% aufweist, die Oberflächenschicht eine Matrix aufweist, die 0,6 bis 1,0 Gewichts-% feststoffgelösten Kohlenstoffs enthält, wobei das Karbid eine Partikelgröße von bis zu 3 µm aufweist, die Oberflächenschicht eine Oberflächenhärte von 62 bis 67 Rockwell-C-Härte aufweist, die Oberflächenschicht 20 bis 40 Volumen-% Restaustenid enthält, und die Oberflächenschicht eine Restdruckspannung von zumindest 100 MPa aufweist, wobei das Walz- und Gleitelement aus einem Hochkohlenstoff-Chromlagerstahl als Ausgangsmaterial gemäß JIS-Standard (Japanischer Industriestandard) hergestellt ist, und die Oberflächenschicht eine Tiefe von 0,5 mm von der Oberfläche aus aufweist, **dadurch gekennzeichnet, dass** der Hochkohlenstoff-Chromlagerstahl JIS SUJ 2 ist, und die Oberflächenschicht ein Niederschlagskarbid in einer Menge von 10 bis 20 % im Flächenverhältnis aufweist, welches Karbid eine Partikelgröße von bis zu 2 µm aufweist.

2. Gleitlager, umfassend eine innere und eine äußere Lauffläche und Rollelemente, wobei zumindest die inneren und äußeren Laufflächen und die Rollelemente ein Element gemäß Anspruch 1 enthalten.

## Revendications

1. Pièce roulante, coulissante comportant un acier à roulements et soumise à un traitement de cémentation, une couche superficielle de la pièce ayant une teneur totale en carbone de 1,0 à 1,6 % en poids, la couche superficielle ayant une matrice contenant de 0,6 à 1,0 % en poids de carbone en solution solide, les particules de carbure mesurant jusqu'à 3 µm, la couche superficielle ayant une dureté Rockwell C en surface de 62 à 67, la couche superficielle contenant de 20 à 40 % en volume d'austénite résiduelle, et la couche superficielle ayant une contrainte résiduelle de compression d'au moins 100 MPa, ladite pièce roulante, coulissante étant réalisée avec, comme matière de base, un acier au chrome à haute teneur en carbone pour roulements normalisé par JIS (Japanese Industrial Standards), et ladite couche superficielle ayant une épaisseur de 0,5 mm à compter de la surface, **caractérisée en ce que** l'acier au chrome à haute teneur en carbone à roulements est du JIS SUJ 2, et la couche superficielle contient un carbure en précipité, à raison de 10 à 20 % en pourcentage de surface, les particules de carbure mesurant jusqu'à 2 µm.

2. Palier à roulement comportant une piste intérieure, une piste extérieure et des éléments roulants, les pistes intérieure et extérieure et/ou l'élément roulant comportant une pièce selon la revendication 1.
